# EUROPEAN PATENT APPLICATION

(11) **EP 2 267 600 A2**
(43) Date of publication of application: **29.12.2010**
(21) Application number: 10178068.2
(22) Date of filing: 02.10.2002
(51) Int. Cl.: G06F 11/30, G06F 12/14, H04L 9/08, H04N 7/167

(54) **Method of securely processing a digital signal**

(30) Priority: 05.10.2001 US 972371
(62) Divisional of application: 02800911.6
(71) Applicant: Sony Electronics, Inc., Park Ridge, NJ 07656 (US)
(72) Inventor: Iwamura, Ryuichi, San Diego, CA CA 92127-1898 (US)
(74) Representative: Scaddan, Gareth Casey

(57) **Abstract**

A method and system for securely decrypting and decoding a digital signal is disclosed. One embodiment of the present invention first accesses an encrypted signal at a first logical circuit. Next, this embodiment determines a broadcast encryption key for the encrypted signal at a second logical circuit separate from the first logical circuit. For example, the second logical circuit where the broadcast key was determined may be across a communication link from the first circuit where the signal is being received. Then, the broadcast encryption key is encrypted by means of a public key and transferred over the communication link. Next, at the first logical circuit, the encrypted broadcast encryption key is decrypted. Therefore, the broadcast encryption key is determined. Then, at the first logical circuit, the encrypted signal is decrypted using the broadcast encryption key. Consequently, the encrypted signal is decrypted without exposing the broadcast encryption key on the communication link in an un-encrypted form.

## Description

### RELATED APPLICATION

This application is a Continuation-in-Part of co-pending commonly-owned United States Patent Application Serial No. 09/696,584 filed October 24,2000, entitled "Method and System for a Secure Digital Decoder" to lwamura.

### FIELD

The preset writing relates to the field of digital signal processing. Specifically, the present writing relates to a system and method for securely decoding and encrypted digital signal. The writing reveals a method and system for a secure digital decoder with secure key distribution.

### BACKGROUND ART

The field of digital video signal processing has seen rapid development in recent years. For example, digital broadcasting is now beginning to replace analog broadcasting. Digital broadcasting must be securely protected, as digital broadcast data can easily be copied without degrading the quality of the content. Currently, most digital broadcast streams are encrypted, for example with Digital Transmission Copy Protection (DTCP).

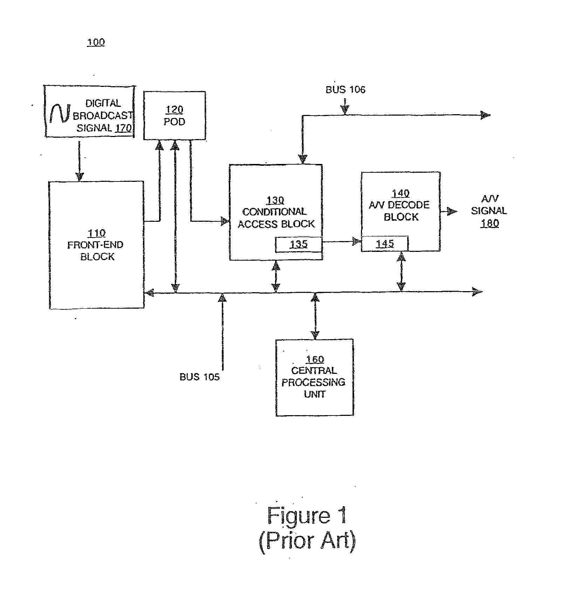

A conventional digital cable set-top box 100 for decrypting and decoding a digital signal is illustrated in Figure 1. When playing a signal that is currently being received, front-end 110 tunes to a digital cable signal 170, demodulates the signal and sends the signal to Point of Deployment removable security module (POD) 120.

POD 120 is provided by the Multiple Service Provider (MSO) (also known as the cable system operator). POD 120 implements a security protocol between the MSO cable headend (not shown) and POD 120. The details of the security protocol are not addressed herein, POD 120 serving to isolate set-top box 100 from such details. POD 120 decrypts the encrypted broadcast signal and re-encrypts it using the Data Encryption Standard (DES). The re-encrypted signal is then sent to conditional access block 130.

POD 120 and set-top box central processing unit 160 communicate over bus 105 to negotiate a broadcast key according to a secure key agreement and challenge/response technique. CPU 160 then transfers the broadcast key to conditional access block 130 over bus 105. The broadcast key is thus exposed while on bus 105, consequently exposing the broadcast signal itself.

The encrypted bitstream from POD 120 is decrypted within conditional access block 130 for processing within conditional access block 130. One function of conditional access block 130 is to transfer the digital signal across IEEE 1394 bus 106 to a storage device (not shown) for permitted recording of the broadcast program. Conditional access block 130 also retrieves previously recorded material from bus 106 for playback.

For viewing of either a signal currently being received by front end 110, or for viewing a signal being played back from storage via bus 106, the digital signal is encrypted within block 130 by local encryptor 135, and transferred to audio visual decode block 140.

Within block 140, local decryptor 145 decrypts the encrypted signal. A/V decode block 140 decodes both video and audio content from the digital bitstream and presents audio and video signals 180 to a television set (not shown).

For reasons of design complexity, design reuse, semi-conductor process capabilities, manufacturing efficiencies and other reasons, it is desirable for central processing unit 160 to be physically separate and distinct from conditional access block 130. Consequently, the transfer of the broadcast key negotiated between POD 120 and CPU 160 from CPU 160 to conditional access block 130 is exposed on bus 105. Thus, unfortunately, the encryption key is vulnerable to being stolen, copied and distributed, rendering the encrypted bitstream from POD 120 to conditional access block 130 similarly vulnerable to unauthorized access.

For reasons of design complexity, design reuse, semi-conductor process capabilities, manufacturing efficiencies and other reasons, it is also desirable for conditional access block 130 to be physically separate and distinct from audio/visual decode block 140. Conventional set top box 100 encrypts the digital signal at local encryptor 135 prior to transfer to local decryptor 145 in an attempt to secure the broadcast (or optionally recorded) signal. Unfortunately, the encryption key is generated in CPU 160, and transferred from CPU 160 to conditional access block 130 and audio/visual decode block 140 over exposed bus 105. Thus, unfortunately, this encryption key is also vulnerable to being discovered through observation, stolen, copied and distributed, rendering the encrypted bitstream from conditional access block 130 to block audio/visual decode block 140 subject to unauthorized access.

Therefore, in this conventional system, the keys to two encrypted bitstreams are vulnerable to being stolen, copied, and distributed, which would result in the misappropriation of the digitally encoded content, resulting in financial loss for the copyright holder.

### SUMMARY OF THE INVENTION

Therefore, it would be advantageous to provide a method and system providing for a secure digital signal decryptor and decoder. A further need exists for a method and/or system which decrypts and decodes a signal without exposing a decrypted signal on the pins of an integrated circuit when the signal is transferred between two integrated circuits. A still further need exists for such a system that does not expose an encryption key on a communication link.

The present invention provides a method and system providing for a secure digital signal decryptor and decoder. Embodiments provide a method and system that decrypt and decode a signal without exposing an encryption key on a communication bus. The present invention provides these advantages and others not specifically mentioned above but described in the sections to follow.

A method and system for securely decrypting and decoding a digital signal is disclosed. One embodiment of the present invention first accesses an encrypted signal at a first logical circuit. Next, this embodiment determines a broadcast encryption key for the encrypted signal at a second logical circuit separate from the first logical circuit. For example, the second logical circuit where the broadcast key was determined may be across a communication link from the first circuit where the signal is being received. Then, the broadcast encryption key is encrypted by means of a public key and transferred over the communication link. Next, at the first logical circuit, the encrypted broadcast encryption key is decrypted. Therefore, the broadcast encryption key is determined. Then, at the first logical circuit, the encrypted signal is decrypted using the broadcast encryption key. Consequently, the encrypted signal is decrypted without exposing the broadcast encryption key on the communication link in an un-encrypted form.

In another embodiment of the present invention, in addition to the steps in the above paragraph, the second logical circuit generates the public encryption key in cooperation with the first logical circuit by use of the Diffie-Hellman Key Exchange technique.

In yet another embodiment, the encryption of the broadcast encryption key is performed at the second logical circuit by a stored program computer according to a computer control program. In still another embodiment, a second computer control program replaces the computer control program at the second logical circuit. In another embodiment, a second computer control program replaces the computer control program at the first logical circuit.

In one embodiment, a local encryption key is first generated at a first logical circuit. Next, the local encryption key is encrypted by means of a first public key and transmitted across a communication link to a second logical circuit. Next, the local encryption key is encrypted by means of a second public key and transmitted across a communication link to a third logical circuit. Then, the local encryption key is decrypted at the second logical circuit and also decrypted at the third logical circuit. Therefore, the local encryption key is securely determined by the second logical circuit and by the third logical circuit. Then, the digital signal is encrypted using the local encryption key at the second logical circuit, transferred to the third logical circuit, and decrypted at the third logical circuit using the local encryption key.

Another embodiment provides for a system for processing a secure digital signal. The system comprises a first logical circuit comprising a local stored-program computer and local memory and a second logical circuit comprising a local encryptor. The first logical circuit decrypts a decryption key and provides the decryption key to the second logical circuit. The second logical circuit encrypts a digital signal using the encryption key. Thus, the system is able to encrypt the received broadcast signal without exposing an un-encrypted encryption key.

In still another embodiment, the local memory is configured to be modifiable, allowing modification of the computer control program. Thus, potential errors in the computer control program can be repaired. Additionally, the encryption technique can be changed.

In another embodiment, the local memory is configured such that the contents of the local memory cannot be observed from outside of the first logical circuit. Thus, the local encryption key can not be observed, and the security of the processing system is preserved.

Another embodiment provides for a method of processing a digital signal comprising accessing a message containing information to modify an encryption technique used in the processing of the digital signal.

### BRIEF DESCRIPTION OF THE DRAWINGS

Figure 1 is an illustration of a conventional digital bitstream decryptor and decoder.
Figure 2 is an illustration of an exemplary digital bitstream decryptor and decoder, according to an embodiment of the present invention.
Figure 3A is an illustration of a conditional access block, according to an embodiment of the present invention.
Figure 3B is an illustration of an audio/visual decode block, according to an embodiment of the present invention.
Figure 4 is a flowchart illustrating a process of securely transferring a digital signal between logical circuits, including the steps of securely transferring an encryption key across a communication link, according to an embodiment of the present invention.
Figure 5 is a flowchart illustrating a process of securely transferring a digital signal between logical circuits, including the steps of securely transferring an encryption key across a communication link, according to another embodiment of the present invention.
Figure 6 is a schematic of a computer system, which may be used as a platform to implement embodiments of the present invention.
Figure 7 is a flow diagram of a process of modifying an encryption technique used in the processing of a digital signal according to an embodiment of the present invention.

### DETAILED DESCRIPTION OF THE INVENTION

In the following detailed description of the present invention, a method and system for securely decrypting and decoding a digital signal with secure key distribution, numerous specific details are set forth in order to provide a thorough understanding of the present invention. However, it will be recognized by one skilled in the art that the present invention may be practiced without these specific details or with equivalents thereof. In other instances, well-known methods, procedures, components, and circuits have not been described in detail as not to unnecessarily obscure aspects of the present invention.

### NOTATION AND NOMENCLATURE

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specirocally stated otherwise as apparent from the following discussions, it is appreciated that throughout the present invention, discussions utilizing terms such as "indexing" or "processing" or "computing" or "translating" or "calculating" or "determining" or "scrolling" or "displaying" or "recognizing" or "generating" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

### SECURE DIGITAL DECODER WITH SECURE KEY DISTRIBUTION

The present Invention provides for a method and system for securely decrypting and decoding a digital signal with secure key distribution. In order to combat theft of encryption keys on a communication link, embodiments of the present invention encrypt the key itself by means of a public key encryption technique before transferring it across a communication link.

A fundamental property of a public key is that a public key does not provide sufficient information to decrypt a signal encrypted by use of the public key. Instead, a signal encrypted by use of a public key may be decrypted with the use of secret information, known as a secret key, known only to the recipient of the encrypted signal. This secret key may be created when the public key is generated.

Because of this property, a public key may be transmitted in the open without compromising information encrypted by use of the public key. One well-known method of determining a public key is the Diffie-Hellman Key Exchange technique. Another well-known method of determining a public key is the Rivest-Shamir-Adleman (RSA) algorithm. It is appreciated that other techniques of determining public keys are also well suited to embodiments of the present invention. Additionally, embodiments of the present invention also provide for a local encryption key so that the bitstream is not exposed on un-encrypted signals between functional blocks of the system.

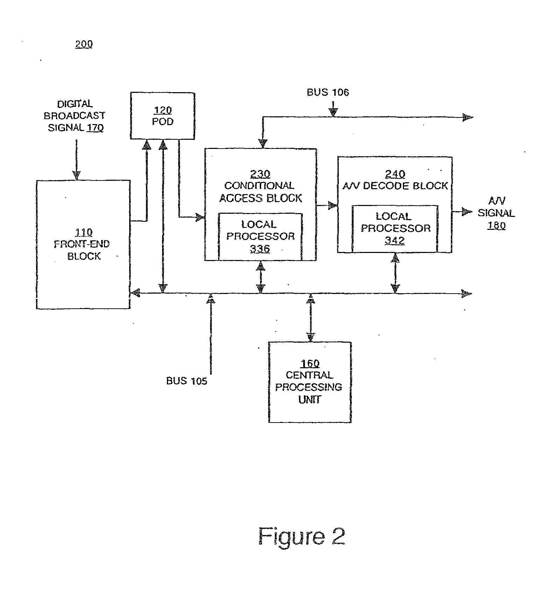

Figure 2 illustrates a diagram of an exemplary digital decoder 200. When playing a signal that is currency being received, front-end 110 tunes to a digital cable signal 170, demodulates the signal and sends the signal to Point of Deployment removable security module (POD) 120. POD 120 decrypts the encrypted broadcast signal and re-encrypts it using the Data Encryption Standard (DES). DES is a well-known encryption technique. The re-encrypted signal is then sent to conditional access block 230.

POD 120 is provided by the Multiple Service Provider (MSO) (also known as the cable system operator). POD 120 implements a security protocol between the MSO headend (not shown) and POD 120. The details of this security protocol are not addressed herein, POD 120 serving to isolate set-top box 100 from these details.

POD 120 and set top box central processing unit 160 communicate over bus 105 to negotiate a broadcast key according to a secure key agreement and challenge/response technique.

CPU 160 and local processor 336 communicate over bus 105 to negotiate a public key. In a preferred embodiment, this public key is generated according to the Diffie-Heilman Key Exchange technique. It is appreciated that other techniques of determining public keys are also well suited to embodiments of the present invention. CPU 160 then encrypts the previously determined broadcast encryption key using this public key. CPU 160 then transfers the encrypted broadcast encryption key to local processor 336 over bus 105, whereupon local processor 336 decrypts the encrypted broadcast encryption key.

Conditional access block 230 decrypts the broadcast signal from POD 120 using the broadcast encryption key and manages the optional storage or playback of the broadcast signal across bus 106 with a storage device (not shown) attached to bus 106.

CPU 160 then determines a local encryption key to be used for the encryption of the signal between conditional access block 230 and A/V decode block 240. In a preferred embodiment, this local encryption key is generated to provide strong encryption when using the DES.

Having previously negotiated a public key between CPU 160 and local processors 336, CPU 160 then encrypts the local encryption key using the public encryption key. CPU 160 then transfers the encrypted local encryption key to local processor 336 over bus 105. Local processor 336 decrypts the encrypted local encryption key. Conditional access block 230 uses this local encryption key to encrypt the digital signal and sends the encrypted signal to A/V decode block 240.

CPU 160 and local processor 342 communicate over bus 105 to negotiate a public key. In a preferred embodiment, this public key is generated according to the Diffie-Heliman Key Exchange technique. CPU 160 then encrypts the previously determined local encryption key using this public key. CPU 160 then transfers the encrypted local encryption key to local processor 342 over bus 105, whereupon local processor 342 decrypts the encrypted local encryption key.

Audio/visual decode block 240 accesses the signal from conditional access block 230, and decrypts it using the local encryption key. Audio/visual decode block 240 then separates the audio and video components of the signal and decodes each signal, generating A/V signal 180 for playback on a television set (not shown).

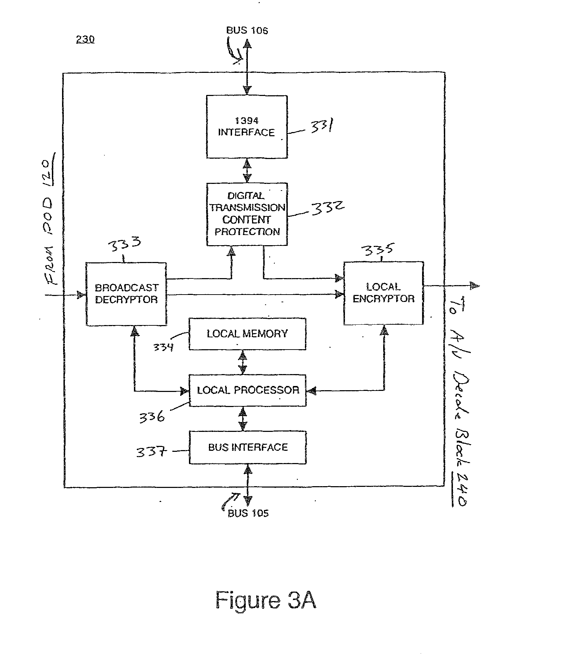

Referring to Figure 3A, broadcast decryptor 333 accesses the encrypted bitstream from POD 120. Bus interface 337 functionally connects conditional access block 230 with bus 105. CPU 160 and local processor 336 negotiate a public encryption key.

CPU 160 then encrypts the broadcast key using the public encryption key. CPU 160 then transfers the encrypted broadcast key to local processor 336 over bus 105. Local processor 336 decrypts the encrypted broadcast key and provides the broadcast key to broadcast decryptor 333.

In the recording mode, the decrypted bitstream from broadcast decryptor 333 is re-encrypted in Digital Transmission Content Protection (DTCP) block 332. DTCP is the encryption for the IEEE 1394 serial bus. The re-encrypted bitstream is sent to a storage device (not shown) via the IEEE 1394 interface 331 and bus 106.

In the playback mode, an encrypted bitstream is read from the IEEE 1394 bus 106 and decrypted by DTCP block 332. For viewing a signal from either DTCP block 332 or directly from broadcast decryptor 333, the signal is accessed by local encryptor 335.

CPU 160 generates a local encryption key. Having previously negotiated a public key between CPU 160 and local processor 336, CPU 160 then encrypts the local encryption key using the public encryption key. CPU 160 then transfers the encrypted local encryption key to local processor 336 over bus 105. Local processor 336 decrypts the encrypted local encryption key and provides the local encryption key to local encryptor 335. Local encryptor 335 then encrypts the signal using the local encryption key.

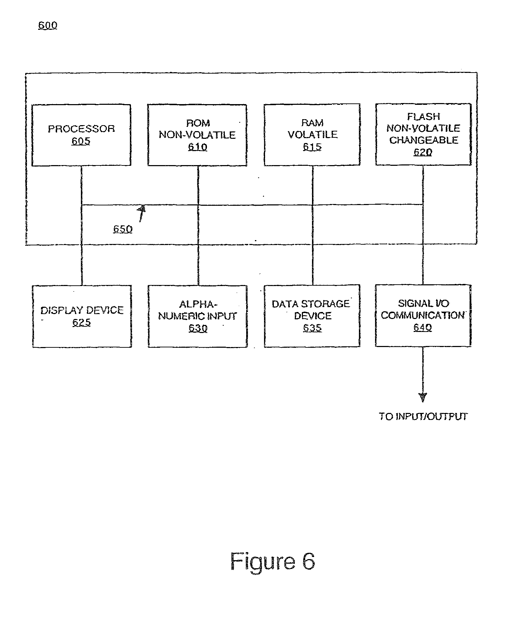

The system 200 also comprises a central processing unit 160, and local processors 336 and 342, which may be computer systems such as illustrated in Figure 6. The CPU 106 is separate from the first 230 and second 240 circuits in that a communication link 105 or other mechanism separates them. For security, embodiments of the present invention will encrypt keys transferred between the CPU 106 and conditional access block 230. Likewise, the present invention will encrypt keys transferred between the CPU 106 and A/V decode block 240. In a preferred embodiment, communication link 105 is a PCI bus.

Bus interfaces 106 and 105 may be any of a variety of physical bus interfaces, including without limitation: Universal Serial Bus (USB) interface, Personal Computer (PC) Card interface, CardBus or Peripheral Component Interconnect (PCI) interface, mini-PCI interface, IEEE 1394, Small Computer System Interface (SCSI), Personal Computer Memory Card International Association (PCMCIA) interface, Industry Standard Architecture (ISA) interface, or RS-232 interface.

Figure 3A also shows local memory 334, which is functionally coupled to local processor 336. Local memory 334 is used for storing program instructions and other information, including encryption keys. In a preferred embodiment, at least a portion of local memory 334 can be modified to receive new program instructions. In a preferred embodiment, local memory 334 is configured such that it cannot be accessed from outside of conditional access block 230. This design element prevents unauthorized access to program instructions and other information, including encryption and decryption keys. One technique to prevent such access is to not expose the signals of local memory 334 on exterior pins of an integrated circuit comprising conditional access block 230.

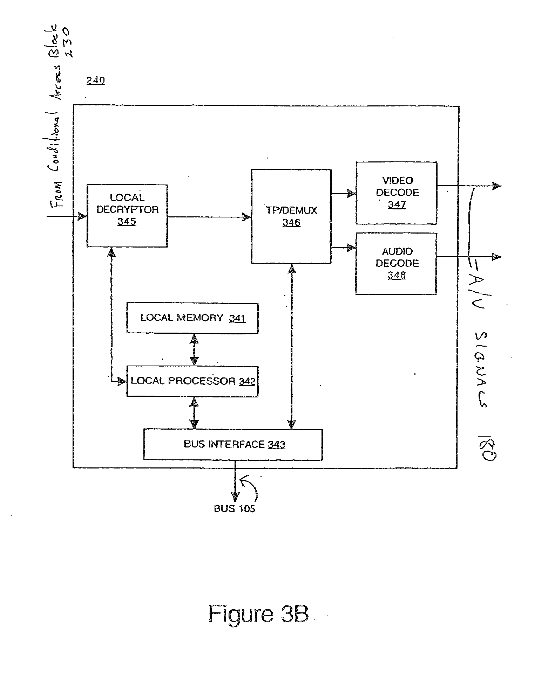

Referring to Figure 3B, local decryptor 345 accesses the encrypted bitstream from local encryptor 335. Bus interface 343 functionally connects A/V decode block 240 with bus 105. CPU 160 and local processor 342 negotiate a second public encryption key. CPU 160 then encrypts the local decryption key using the second public encryption key. CPU 160 then transfers the encrypted local decryption key to local processor 342 over bus 105. Local processor 342 decrypts the encrypted local decryption key and provides the local decryption key to local decryptor 345. Local decryptor 345 decrypts the encrypted bitstream.

The decrypted or "clear" bitstream from local decryptor 345 is accessed by TP/DEMUX block 346. TP/DEMUX 346 separates the audio and visual components the bitstream.

The demultiplexed video sigsial is sent from TP/demux block 346 to video decode block 347, generating a portion of A/V signal 180, and on to a television set (not shown) for viewing.

The demultiplexed audio signal is sent from TP/demux block 346 to audio decode block 348, generating a portion of A/V signal 180, and on to a television set (not shown) for or other audio amplifier (not shown) for listening.

Figure 3B also shows local memory 341, which is functionally coupled to local processor 342. Local memory 341 is used for storing program instructions and other information, including encryption keys. In a preferred embodiment, local memory 341 is configured such that it can not be accessed from outside of audio/visual decode block 240. This design element prevents unauthorized access to program instructions and other information, including encryption and decryption keys. One technique to prevent such access is to not expose the signals of local memory 341 on exterior pins of an integrated circuit comprising A/V decode block 240.

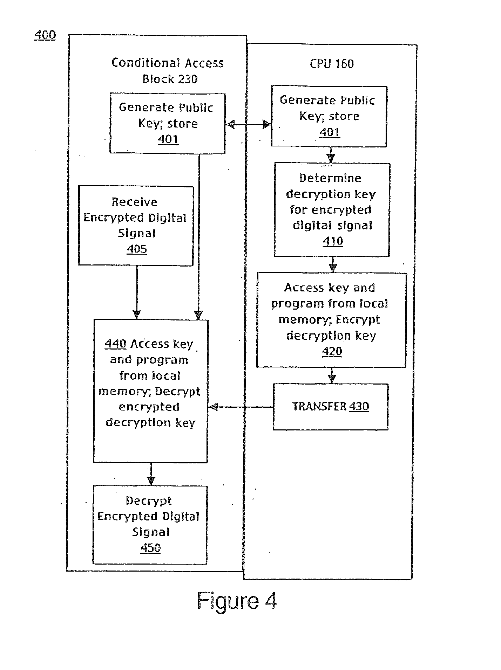

Referring now to Figure 4, the steps of a process 400 for a method of securely processing a digital signal will be described. Process 400 may be implemented as instructions stored in computer memory and executed over a processor of any general purpose computer system. It should be noted that process 400 includes steps, which in a preferred embodiment take place in separate and distinct logical circuits, thus requiring multiple computer systems to implement.

In step 401, a public key is determined and exchanged through interaction between two logical circuits, for example between conditional access block 230 and CPU 160. In addition, each block (230, 160) internally generates its own private key. One well-known method of determining a public key is the Diffie-Heliman Key Exchange technique. Another well-known method of determining a public key is RSA. However, the present invention is well suited to other techniques of generating public keys. The public key is stored in local memory, for example local memory 334.

In step 405, an encrypted bitstream is received, for example, by conditional access block 230.

In a location separate from where the encrypted bitstream is received, for example in CPU 160, the decryption key for the encrypted bitstream is determined in step 410. In digital decoder 200, for example, the broadcast decryption key is determined by POD 120 and communicated in an encrypted form to CPU 160 across bus 105. CPU 160 then decrypts the broadcast decryption key.

In step 420, the decryption key is encrypted, for example by CPU 160, using the public key determined in step 401 and the internal private key. In a preferred embodiment, the public key is accessed from a portion of local memory, for example CPU 160's local memory (not shown), and the computer program which controls CPU 160 to perform the encryption is accessed from a second portion of local memory.

In step 430, the encrypted decryption key is transferred across a communication link, for example bus 105, from the second location, for example CPU 160, to a first location, for example conditional access block 230.

In step 440, the encrypted decryption key is decrypted, for example by local processor 336. In a preferred embodiment, the public key is accessed from a portion of local memory, for example local memory 334, and the computer program which controls local processor 336 to perform the decryption is accessed from a second portion of local memory 334.

In step 450, the decrypted decryption key is used to decrypt the encrypted bitstream, for example by broadcast decryptor 333.

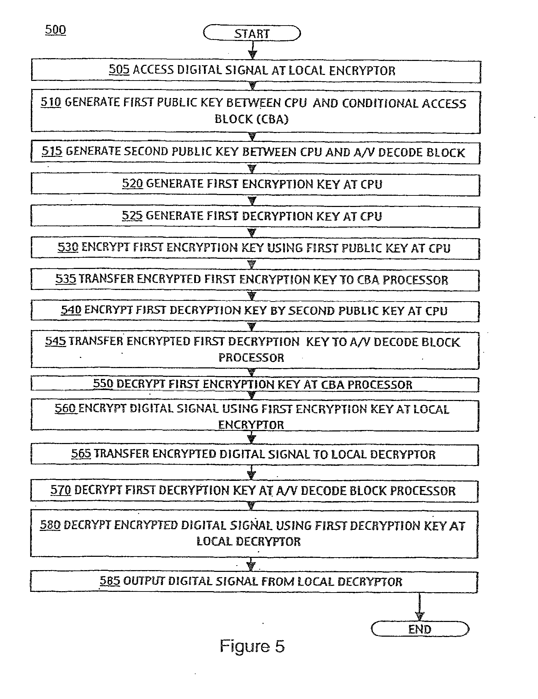

Referring now to Figure 5, the steps of a process 500 for securely transferring a bitstream between circuits will be discussed. Process 500 may be implemented as instructions stored in computer memory and executed over a processor of any general purpose computer system. It should be noted that Process 500 includes steps, which in a preferred embodiment take place in separate and distinct logical circuits, thus requiring multiple computer systems to implement.

In step 505, the local encryptor 335 accesses a digital signal from either digital transmission content protection block 332 or the broadcast decryptor 333.

In step 510, first public encryption keys are generated between a first logical circuit, for example CPU 160, and a second logical circuit, for example conditional access block 230. Additionally, each logical circuit (160,230) internally generates its own private key. In step 515, second public encryption keys are generated between the first logical circuit, for example CPU 160 and a third logical circuit, for example audio/visual decode block 240. Additionally, each logical circuit (160, 240) internally generates its own private key. However, the present invention is well suited to other techniques of generating public keys.

In step 520, a local encryption key is determined, for example by CPU 160. In a preferred embodiment, the local encryption key is compatible with the requirements of the Data Encryption Standard (DES).

In step 525, a local decryption key is determined, for example by CPU 160. In a preferred embodiment using DES for local encryption, the local decryption key is identical to the local encryption key. It is appreciated that other forums of encryption may be chosen, for example, for higher levels of security or for more favorable computational characteristics. Another form of encryption may require a decryption key which differs from the encryption key.

In step 530, the local encryption key is encrypted by use of the first public encryption key and its own private key, for example by CPU 160. In a preferred embodiment, the public key and the private key are accessed from a portion of local memory, for example CPU 160°s local memory (not shown), and the computer program which controls CPU 160 to perform the encryption is accessed from a second portion of local memory.

In step 535, the encrypted local encryption key is transferred to the second logical circuit, for example local processor 336, across a communication link, for example bus 105.

In step 540, the local decryption key is encrypted by use of the second public encryption key and its own private key, for example by CPU 160.

In step 545, the encrypted local decryption key is transferred to the third logical circuit, for example local processor 342, across a communication link, for example bus 105.

In step 550, the encrypted local encryption key is decrypted using the first public key and its own private key, for example by local processor 336. In a preferred embodiment, the decryption key is accessed from a portion of local memory, for example local memory 334, and the computer program which controls local processor 336 to perform the decryption is accessed from a second portion of local memory.

In step 560, the digital signal accessed by the second circuit is encrypted using the local encryption key, for example, by local encryptor 335. In a preferred embodiment, this encryption is performed according to DES, a well-known encryption technique. However, the present invention is well suited to other techniques of encryption.

In step 565, the encrypted digital signal is transferred from local encryptor 335 to a third circuit, for example local decryptor 345.

In step 570, the encrypted local decryption key is decrypted by use of the second decryption key and its own private key, for example by local processor 342.

In step 580, the digital signal as received by local encryptor 335 is encrypted according to the encryption key provided by local processor 336.

In step 580, the local decryption key is accessed, for example from local processor 342, by local decryptor 345. Local decryptor 345 decrypts the encrypted digital signal, recreating the original clear digital signal. In a preferred embodiment, this decryption is performed according to DES, a well-known encryption technique. However, it is appreciated that other well-known encryption techniques may be used in accordance with embodiments of the present invention.

Finally, in step 585, the digital signal is output from local decryptor 345. Thus, the digital signal has been transferred securely from conditional access block 230 to A/V decode block 240 without exposing the digital signal in an unencrypted condition. Further, the encryption and decryption key(s) for the transfer have been distributed in a secure manner as well.

In addition, the generation of public keys and the generation of the keys for the bitstream encoding described in process 400 and process 500 may be performed periodically, for example with the receipt of each different content material (e.g., motion picture). By changing the keys frequently, the method and system are protected from the so-called "brute force" attack, in which all possible keys are sequentially attempted.

Figure 6 illustrates circuitry of computer system 600, which may form a platform for a portion of the central processing unit 160, the local processor 336 or the local processor 342. Computer system 600 includes an address/data bus 650 for communicating information, a central processor 605 functionally coupled with the bus for processing information and instructions, a volatile memory 615 (e.g., random access memory RAM) coupled with the bus 650 for storing information and instructions for the central processor 605 and a non-volatile memory 610 (e.g., read only memory ROM) coupled with the bus 650 for storing static information and instructions for the processor 605. Computer system 600 also optionally includes a changeable, non-volatile memory 620 (e.g., flash) for storing information and instructions for the central processor 605, which can be updated after the manufacture of system 600.

Computer system 600 also optionally includes a data storage device 635 (e.g. a PCMCIA memory card) coupled with the bus 650 for storing information and instructions.

Also included in computer system 600 of Figure 6 is an optional alphanumeric input device 630. Device 630 can communicate information and command selections to the central processor 600. The optional display device 625 utilized with the computer system 600 may be a liquid crystal device, cathode ray tube (CRT), field emission device (FED, also called flat panel CRT), light emitting device (LED), electro-luminescent device or other display device suitable for creating graphic images and alphanumeric characters recognizable to the user. Optionali signal input/output communication device 640 is also coupled to bus 650.

In a preferred embodiment, ROM 610, RAM 615 and flash 620 are configured such that they cannot be accessed from outside of their respective functional circuits. This design element prevents unauthorized access to program instructions and other information, including encryption and decryption keys. One technique to prevent such access is to not expose the signals of bus 650 on exterior pins of an integrated circuit.

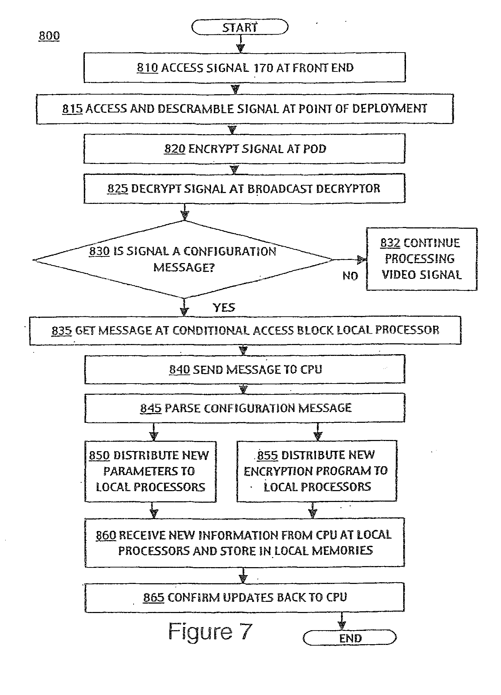

Figure 7 describes the steps of a process 800 for modifying an encryption technique in the processing of a digital signal. In step 810, digital broadcast signal 170 Is accessed by frontend 110. In step 815, a bitstream from frontend 110 is accessed at POD 120 and descrambled. In step 820, POD 120 re-encrypts the bitstream using a broadcast encryption key. In step 825, the encrypted bitstream from POD 120 is accessed and decrypted by broadcast decryptor 333.

From time to time it may be desirable for the Multiple Service Operator (MSO) (also known as the cable system operator) to change the encryption technique used by system 200 when processing broadcast signal 170.

Process 800 allows the MSO to change the encryption parameters used in the public key exchange technique, or the MSO may replace the program code that controls the generation of keys and the encryption of keys. By replacing program code, program errors may be fixed in the field, or entirely new encryption processes may be installed into system 200.

In order to make such a change, the MSO generates a configuration message for system 200. This message contains a command format to distinguish it from normal video data, and the necessary further information required to make the change, for example, new values for the encryption parameters.

This configuration message is packetized, time-multiplexed and scrambled in the same way as video and other packets at the headend of the MSO (not shown).

In step 830, local processor 336 monitors the decrypted data stream from broadcast decryptor 333 to detect such a configuration message. If such a message is not detected, normal processing of the video signal continues at step 832.

If a configuration message is detected in step 830, local processor 336 commands broadcast decryptor 333 not to forward the non-video signal. In step 835, local processor 336 gathers the message and in step 840 forwards the configuration message to central processor 160 over bus 105.

In step 845, CPU 160 interprets the message. CPU 160 then generates further local configuration messages for one or both local processors 336 and 342. These local configuration messages contain instructions for the local processors and new information for storage in local memory, for example local memories 334 and 341. It is understood that some possible configuration messages may not require changes to all local processors and local memories. Process 800 flow continues to either step 850 or 855 depending on the requirements of the configuration message. It is understood that configuration messages other than the two described here are possible, and may be processed in a similar fashion.

If step 850 is taken, CPU 160 sends a local configuration message via bus 105 to local processors 336 and 342. This message contains a command code and the new encryption parameters.

Alternatively, if step 855 is taken, CPU 160 sends a local configuration message via bus 105 to local processors 336 and 342. This message contains a command code and new program instructions and optionally other new information for use by the new program. It is understood that new program instructions can change many aspects of a method for processing a digital signal, including without limitation changing the method of generating public keys, for example from Diffie-Hellman to RSA, changing the method of key encryption, for example to DES, and others.

In step 860, the local processor 336 access the local configuration message. It stores the new information in its local memory, for example local memory 334.

In step 865, local processor 336 sends a confirmation message to CPU 160 via bus 105, indicating that local processor 336 has successfully complete the update to local memory 334. Upon receipt of the confirmation message, CPU 160 will also update its copy of the encryption parameters or load a new program into its local memory, if required.

The preferred embodiment of the present invention a method and system for securely decrypting and decoding a digital signal with secure key distribution is thus described. While the present invention has been described in particular embodiments, it should be appreciated that the present invention should not be construed as limited by such embodiments, but rather construed according to the below claims.

Further particular and preferred aspects of the invention are set out in the accompanying independent and dependent clauses. Features of the dependent clauses may be combined with those of the independent clauses and independent claims as appropriate and in combinations other than those explicitly set out in the clauses and claims.

### CLAUSES

1. A method of securely processing a digital signal comprising:
   a) generating a public encryption key for use with a first logical circuit and a second logical circuit separate from said first logical circuit;
   b) accessing an encrypted signal at said first logical circuit;
   c) determining a first decryption key for said encrypted signal at said second logical circuit;
   d) encrypting said first decryption key at said second logical circuit by use of said public encryption key;
   e) transferring said encrypted first decryption key from said second logical circuit to said first logical circuit over a communication link;
   f) at said first logical circuit, decrypting said encrypted first decryption key by use of a secret key to determine said first decryption key; and
   g) at said first logical circuit, decrypting said encrypted signal using said first decryption key.
2. The method of Clause 1 wherein a) comprises generating said public encryption key using the technique of Diffie-Hellman Key Exchange.
3. The method of Clause 1 wherein d) comprises:
   d1) accessing said public encryption key from a first portion of local memory at said second logical circuit;
   d2) accessing a computer control program from a second portion of local memory at said second logical circuit; and
   d3) executing said computer control program at said second logical circuit to encrypt said first decryption key using said public encryption key.
4. The method of Clause 1 wherein d) comprises:
   d1) accessing said public encryption key from a first portion of local memory at said second logical circuit;
   d2) replacing a computer control program stored in a second portion of local memory at said second logical circuit with a new computer control program;
   d3) accessing said new computer control program from said second portion of local memory; and
   d4) executing said new computer control program at said second logical circuit to encrypt said first decryption key using said public encryption key.
5. The method of Clause 1 wherein f) comprises:
   f1) accessing a second decryption key from a first portion of local memory at said first logical circuit;
   f2) accessing a computer control program from a second portion of local memory at said first logical circuit; and
   f3) executing said computer control program to decrypt said first decryption key using said second decryption key.
6. The method of Clause 1 wherein f) comprises:
   f1) accessing a second decryption key from a first portion of local memory at said first logical circuit;
   f2) replacing a computer control program stored in a second portion of local memory at said first logical circuit with a new computer control program;
   f3) accessing said new computer control program from said second portion of local memory; and
   f4) executing said new computer control program at said second logical circuit to decrypt said first decryption key using said second decryption key.
7. The method of Clause 1 wherein said digital signal is substantially compliant with the Motion Pictures Experts Group (MPEG) format.
8. A method of securely processing a digital signal comprising:
   a) generating a first public encryption key for use with a first logical circuit and a second logical circuit, and generating a second public encryption key for use with said first logical circuit and a third logical circuit;
   b) generating a local encryption key and a local decryption key at said first logical circuit;
   c) at said first logical circuit, encrypting said local encryption key by use of said first public encryption key and encrypting said local decryption key by use of said second public encryption key;
   d) transferring said encrypted local encryption key to said second logical circuit and transferring said encrypted local decryption key to said third logical circuit across a communication link;
   e) decrypting said encrypted local encryption key at said second logical circuit and decrypting said encrypted local decryption key at said third logical circuit; and
   f) transferring said digital signal in encrypted form from said second logical circuit to said third logical circuit across a second communication link.
9. The method of Clause 8 wherein f) comprises:
   f1) encrypting said digital signal at said second logical circuit using said local encryption key;
   f2) transferring said digital signal in encrypted form across said second communication link between said second logical circuit and said third logical circuit; and
   f3) decrypting said encrypted form of said digital signal at said third logical circuit using said local decryption key.
10. The method of Clause 8 wherein e) comprises:
   e1) decrypting said encrypted local encryption key at said second logical circuit using said first public encryption key; and
   e2) decrypting said encrypted local decryption key at said third logical circuit using said second public encryption key.
11. The method of Clause 8 wherein c) comprises:
   c1) accessing said first public encryption key from a first portion of local memory of said first logical circuit; and
   c2) accessing a computer control program from a second portion of local memory of said first logical circuit; and
   c3) executing said computer control program on said first logical circuit to encrypt said first local encryption key.
12. The method of Clause 8 wherein c) comprises:
   c1) accessing said first public encryption key from a first portion of local memory of said first logical circuit;
   c2) replacing a computer control program stored in a second portion of local memory at said first logical circuit with a new computer control program;
   c3) accessing said new computer control program from said second portion of local memory; and
   c4) executing said new computer control program on said first logical circuit to encrypt said first local encryption key.
13. The method of Clause 8 wherein a) comprises generating said first public encryption key and said second public encryption key using the technique of Diffie-Hellman Key Exchange.
14. The method of Clause 8 wherein e) comprises:
   e1) accessing a decryption key from a first portion of local memory of said second logical circuit;
   e2) accessing a computer control program from a second portion of local memory of said second logical circuit; and
   e3) executing said computer control program on said second logical circuit to decrypt said local encryption key.
15. The method of Clause 8 wherein e) comprises:
   e1) accessing a decryption key from a first portion of local memory of said second logical circuit;
   e2) replacing a computer control program stored in a second portion of local memory at said second logical circuit with a new computer control program;
   e3) accessing said new computer control program from said second portion of local memory; and
   e4) executing said new computer control program on said second logical circuit to decrypt said local encryption key.
16. The method of Clause 8 wherein the encryption of said digital signal at said second logical circuit and the decryption of said encrypted digital signal at said third logical circuit are conducted in accordance with the procedures of the Data Encryption Standard.
17. A system for processing a secure digital signal, comprising:
   a first logical circuit for decrypting a local encryption key, said first logical circuit comprising a local processor and local memory; and
   a second logical circuit for encrypting said digital signal using said local encryption key accessed from said first logical circuit.
18. The system of Clause 17, further comprising a computer control program contained within said first logical circuit, said computer control program for controlling said local processor and for receiving said encryption key in an encrypted form and for decrypting said encryption key prior to providing said encryption key to said second logical circuit.
19. The system of Clause 17, further comprising a modifiable local memory contained within said first logical circuit, said modifiable local memory enabling the modification of a computer control program stored within said local memory.
20. The system of Clause 17, further configured such that the contents of said local memory cannot be observed from outside of said first logical circuit.
21. A method of securely processing a digital signal comprising:
   a) monitoring said digital signal for a message to modify an encryption technique used in managing encryption keys used in processing said digital signal;
   b) accessing said message;
   c) interpreting said message; and
   d) modifying said encryption technique in accordance with said message, wherein said encryption technique is used to manage encryption keys used in processing said digital signal.
22. The method of Clause 21 wherein d) comprises modifying the parameters for generating a public key.
23. The method of Clause 21 wherein d) comprises modifying a computer control program for generating a public key.
24. The method of Clause 21 wherein d) comprises modifying a computer control program to encrypt keys.
25. The method of Clause 21 wherein b) comprises accessing said message from a digital video cable signal provided by a Multiple Service Operator.

## Claims

1. A method of securely processing a digital signal comprising:
a) generating a first public encryption key for use with a first logical circuit and a second logical circuit, and generating a second public encryption key for use with said first logical circuit and a third logical circuit;
b) generating a local encryption key and a local decryption key at said first logical circuit;
c) at said first logical circuit, encrypting said local encryption key by use of said first public encryption key and encrypting said local decryption key by use of said second public encryption key;
d) transferring said encrypted local encryption key to said second logical circuit and transferring said encrypted local decryption key to said third logicla circuit across a communication link;
e) decrypting said encrypted local encryption key at said second logical circuit and decrypting said encrypted local decryption key at said third logical circuiu; and
f) transferring said digital signal in encrypted form from said second logical circuit to said third logical circuit across a second communication link.

2. The method of Claim 1 wherein f) comprises:
f1) encrypting said digital signal at said second logical circuit using said local encryption key;
f2) transferring said digital signal in encrypted form across said second communication link between said second logical circuit and said third logical circuit; and
f3) decrypting said encrypted form of said digital signal at said third logical circuit using said local decryption key.

3. The method of Claim 1 wherein e) comprises:
e1) decrypting said encrypted local encryption key at said second logical circuit using said first public encryption key; and
e2) decrypting said encrypted local decryption key at said third logical circuit using said second public encryption key.

4. The method of Claim 1 wherein c) comprises:
c1) accessing said first public encryption key from a first portion of local memory of said first logical circuit; and
c2) accessing a computer control program from a second portion of local memory of said first logical circuit; and
c3) executing said computer control program on said first logical circuit to encrypt said first local encryption key.

5. The method of Claim 1 wherein c) comprises:
c1) accessing said first public encryption key from a first portion of local memory of said first logical circuit;
c2) replacing a computer control program stored in a second portion of local memory at said first logical circuit with a new computer control program;
c3) accessing said new computer control program from said second portion of local memory; and
c4) executing said new computer control program on said first logical circuit to encrypt said first local encryption key.

6. The method of Claim 1 wherein a) comprises generating said first public encryption key and said second public encryption key using the technique of Diffie-Hellman Key Exchange.

7. The method of Claim 1 wherein e) comprises:
e1) accessing a decryption key from a first portion of local memory of said second logical circuit;
e2) accessing a computer control program from a second portion of local memory of said second logical circuit; and
e3) executing said computer control program on said second logical circuit to decrypt said local encryption key.

8. The method of Claim 1 wherein e) comprises:
e1) accessing a decryption key from a first portion of local memory of said second logical circuit;
e2) replacing a computer control program stored in a second portion of local memory at said second logical circuit with a new computer control program;
e3) accessing said new computer control program from said second portion of local memory; and
e4) executing said new computer control program on said second logical circuit to decrypt said local encryption key.

9. The method of Claim 1 wherein the encryption of said digital signal at said second logical circuit and the decryption of said encrypted digital signal at said third logical circuit are conducted in accordance with the procedures of the Data Encryption Standard.

10. A system for processing a secure digital signal, comprising:
a first logical circuit for decrypting a local encryption key, said first logical circuit comprising a local processor and local memory; and
a second logical circuit for encrypting said digital signal using said local encryption key accessed from said first logical circuit.

11. The system of Claim 10, further comprising a computer control program contained within said first logical circuit, said computer control program for controlling said local processor and for receiving said encryption key in an encrypted form and for decrypting said encryption key prior to providing said encryption key to said second logical circuit.

12. The system of Claim 10, further comprising a modifiable local memory contained within said first logical circuit, said modifiable local memory enabling the modification of a computer control program stored within said local memory.

13. The system of Claim 10, further configured such that the contents of said local memory cannot be observed from outside of said first logical circuit.
